(19) Europäisches Patentamt
European Patent Office
Office européen des brevets

(11) EP 4 703 395 A1

(12) EUROPEAN PATENT APPLICATION

(43) Date of publication:
**04.03.2026 Bulletin 2026/10**

(21) Application number: **25198129.6**

(22) Date of filing: **26.08.2025**

(51) International Patent Classification (IPC):
***C08F 110/06*** *(2006.01)* ***C08L 23/12*** *(2006.01)*
***B65D 75/00*** *(2006.01)*

(52) Cooperative Patent Classification (CPC):
(C-Sets available)
**C08F 110/06; C08L 23/12;** C08F 4/65908;
C08F 4/65912; C08F 4/65916; C08L 2203/162;
C08L 2314/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.08.2024 EP 24196519**

(71) Applicant: **Borealis GmbH**
**1020 Vienna (AT)**

(72) Inventors:
- **CARMELI, Enrico**
**4021 Linz (AT)**
- **WANG, Jingbo**
**4021 Linz (AT)**
- **GAHLEITNER, Markus**
**4021 Linz (AT)**
- **KAYNAK, Baris**
**4021 Linz (AT)**
- **CAVACAS, Paulo**
**2800 Mechelen (BE)**
- **BOXUS, Emmanuel**
**3583 Beringen (BE)**
- **KOLLNBERGER, Natalie**
**4021 Linz (AT)**

(74) Representative: **Maikowski & Ninnemann Patentanwälte Partnerschaft mbB**
**Postfach 15 09 20**
**10671 Berlin (DE)**

## (54) CAST FILM CONSISTING OF A POLYPROPYLENE COMPOSITION

(57) The invention relates to a cast film obtained from a polypropylene composition comprising a) at least 95 wt.-% (based on the overall weight of the polyolefin composition) of at least one polypropylene homopolymer PPH having a molecular weight distribution Mw/Mn measured by GPC (according to ISO 16014-4:2003 and ASTM D 6474-99) in the range of 2.8 to 3.5, a $MFR_2$ (ISO1133, 2.16 kg load at 230 °C) between 2.5 and 5.0 g/10 min, and a sum of 2,1-insertion in the range of 0.3 to 1.5 mol% as determined by $^{13}C$ nuclear magnetic resonance (NMR) spectroscopy, a melting temperature ($T_m$) (measured according to ISO 11357/part 3/method C2) in the range of 145°C to 160°C, a xylene cold soluble (XCS) content determined according to ISO 16152 based on the overall weight of polypropylene homopolymer of less than 1.5 wt.-%, and b) up to 5 wt.-% of one or more additives, wherein the sum of all ingredients always adds up to 100 wt.-%. The invention relates also to the use of said cast film in pharmaceutical packaging systems.

EP 4 703 395 A1

(52) Cooperative Patent Classification (CPC): (Cont.)

C-Sets
**C08F 110/06, C08F 2/001;**
**C08F 110/06, C08F 4/6492;**
**C08F 110/06, C08F 4/65927;**
**C08K 5/098, C08L 23/12;**
C08F 110/06, C08F 2500/26, C08F 2500/12,
C08F 2500/35, C08F 2500/34, C08F 2500/33

## Description

The present invention is directed to a cast film consisting of a polypropylene composition and the use of said cast film in pharmaceutical packaging systems.

## Description

Push Through Packaging (PTP) is a packaging form in which contents such as pharmaceuticals and foods are stored in a pocket created by thermoforming a plastic sheet, and an aluminum foil coated with adhesive is heat-sealed so as to seal the opening. The contents such as medicines and foods are taken out by pressing the pocket portion with a finger from the outside and pushing the foil with the contents.

The PTP packaging sheet used for PTP packaging should be transparent so that the state of the contents can be confirmed, should provide a barrier against water vapor to ensure the quality of the contents, should be thermoformable for molding according to the shape of the contents, and should have a certain stiffness to retain the shape of the formed cavities during storage.

Following the current industry needs and trends, packaging in pharmaceutical industry is also heavily focused on providing easily recyclable packaging for products. In particular, pharmaceutical blister packaging has gained a special attention in the recent years in Europe, as in many of them the material on the blister side is polyvinyl chloride (PVC), polyvinylidene chloride (PVDC) or fluoropolymers, while the push-through closure is made of aluminum, which essentially prevents them from being mechanically recycled. Being on the market for many years, these structures do not really have an ideal design; for instance the aluminum layer has issues with sealing with the PVC-based layer. An additional sealant layer must be present between those two layers in order to strengthen the sealing; which in the end causes the recycling to be even more complicated, and increases costs for production. In addition, the high moisture penetration capability of PVC makes it also a less-attractive material for pharmaceutical blister packaging, since it becomes challenging to preserve the content in the packaging free from any contamination.

Alternative materials to PVC-based blisters can be polyolefins, and in particular polypropylene (PP). However, it is known that for semicrystalline polymers like PP having good thermoforming ability and low water vapor transmission rate (WVTR) at the same time is a challenge.

An example on use of PP in blister application is reported in JP 5249797 B2, which refers to a (push-through) packaging sheet having a single-layer structure, comprising a propylene homopolymer (A) having a sum of 1,3-intercalated bonds of 0.2 mol-% or less polymerized using a metallocene catalyst system, and a petroleum resin, the melt flow rate is 0.1 to 10 g/10 min, the melting point measured by Differential Scanning Calorimeter (DSC) is in the range of 155 to 167 °C, and the amount of 2,1-insertion bond of propylene is 0.5 mol-% or less. However, a petroleum resin is added to the propylene homopolymer used as a layer in the PTP packaging system, making this system not compliant to the European Pharmacopoeia that regulates the composition of the blister film.

It must be stressed that most of the packaging manufacturers have only experience with PVC-based materials, which are notoriously easy to thermoform above the glass transition temperature of PVC. Therefore, any improvement in the ability of a film to be thermoformed by either starting at lower temperature or by broadening the temperature window of thermoforming is appreciated by converters.

The two main requirements for a successful blister film are low water vapor transmission rate (WVTR) combined with a sufficient ability to be thermoformed. In this respect, the crystalline phase of the polymer is usually the driver property in a monolayer system. However, the challenge is that a high crystallinity level in the material would be responsible for lower WVTR, but can dramatically decrease the thermoforming window, while lower crystallinity favors thermoformability at the expense of water barrier properties.

It was therefore an object of the present invention to provide polypropylene homopolymers that can fulfill these requirements with a better performance for the application in PTP packaging systems.

This object has been solved by providing a polypropylene composition for use as a cast film with the features as described in the claims.

Accordingly, a polypropylene composition for a cast film is provided, wherein the polypropylene composition comprises

a) at least 95 wt.-% (based on the overall weight of the polypropylene composition) of at least one polypropylene homopolymer (PPH) having

a molecular weight distribution Mw/Mn measured by GPC (according to ISO 16014-4:2003 and ASTM D 6474-99) in the range of 2.8 to 3.5,

a $MFR_2$ (ISO1133, 2.16 kg load at 230 °C) between 2.5 and 5.0 g/10 min, and

a sum of 2,1-insertion (or 2,1-erythro-regio-defects) in the range of 0.3 to 1.5 mol-% as determined by $^{13}C$ nuclear magnetic resonance (NMR) spectroscopy, and

a melting temperature ($T_m$) (measured according to ISO 11357/part 3/method C2) in the range of 145°C to 160°C,

a xylene cold soluble (XCS) content determined according to ISO 16152 based on the overall weight of polypropylene homopolymer of less than 1.5 wt.-%, and

b) up to 5 wt.-% of at one or more additives, wherein the sum of all ingredients always adds up to 100 wt.-%,

As will be discussed in further detail below, the at least one polypropylene homopolymer (PPH) used in the present polypropylene composition is obtained from a from single-site catalyst (SSC-PP). The polypropylene homopolymer (PPH) is preferably a bimodal homopolymer.

The cast film obtained from said polypropylene composition shows a broader thermoforming window than previously known compositions. The lower forming temperature allows to use of less energy for heating up the film and to obtain a better homogeneity of the temperature over the area of the heating plates that are pre-heating the film just before thermoforming occurs. The latter aspect results in a more homogeneous distribution of the temperature over the whole film and, thus, each cavity will experience the same thermal history.

Furthermore, the cast film obtained from said polypropylene composition shows a reduced water vapor transmission rate (WVTR), a thermoforming window which is broader and starts at lower temperature, and good mechanical and optical properties.

In an embodiment of the cast film, the polypropylene composition comprises

a) at least 96 wt.-% (based on the overall weight of the polypropylene composition), preferably at least 97 wt.-%, more preferably at least 98 wt.-%, even more preferably at least 99 wt.-% of the at least one polypropylene homopolymer (PPH), and
b) up to 4 wt.-%, preferably up to 3 wt.-%, more preferably up to 2 wt.-%, even more preferably up to 1 wt.-% of one or more additives, wherein the sum of all ingredients always adds up to 100 wt.-%.

In a specific embodiment of the cast film, the polypropylene composition comprises less than 0.5 wt.-% additives, in particular less than 0.5 wt.-% antioxidants, more in particular less than 0.3 wt.-% antioxidants, even more in particular less than 0.2 wt.-% antioxidants, with the at least one polypropylene homopolymer being the remainder adding up to 100 wt.-%.

It is to be understood that the polypropylene composition and the cast film obtained therefrom is free of any petroleum resin or wax.

In the following the invention is defined in more detail.

<u>Polypropylene homopolymer (PPH)</u>

The major part of the polypropylene composition used for the cast film is a polypropylene homopolymer.

Homopolymers are polymers that are made up entirely of just one monomeric compound; i.e. if the macromolecules consist of basic building blocks (monomers) of the same type, they are referred to as homopolymers.

The at least one polypropylene homopolymer is a single-site catalyst based polypropylene (SSC-PP), the synthesis thereof being described in more detail below.

In an embodiment, the polypropylene composition used for the cast film contains only one polypropylene homopolymer, preferably only the polypropylene homopolymer described in detail below; i.e. no further homopolymers or copolymers, such as polyethylene or polypropylene copolymers may be added to the final polyolefin composition.

As mentioned above, the polypropylene homopolymer PPH has an $MFR_2$ (ISO1133, 2.16 kg load at 230 °C) between 2.5 and 5.0 g/10min. In an embodiment, the at least one polypropylene homopolymer has an $MFR_2$ (ISO1133, 2.16 kg load at 230 °C) between 2.5 and 4.5 g/10 min, preferably in the range between 2.7 and 3.5 g/10 min.

As also mentioned, the polypropylene homopolymer PPH has a molecular weight distribution Mw/Mn or polydispersity (measured by GPC according to ISO 16014-4:2003 and ASTM D 6474-99) in the range from 2.8 to 3.5, preferably in the range from 3.0 to 3.2.

The polypropylene homopolymer preferably has a weight average molecular weight Mw in a range of 180 to 420 kg/mol, more preferably in a range of 200 to 400 kg/mol, even more preferably in a range of 220 to 380 kg/mol.

As further mentioned, the polypropylene homopolymer PPH has a sum of 2,1-insertion or 2,1-erythro-regio defects in the range of 0.3 to 1.5 mol-%. In an embodiment, the at least one polypropylene homopolymer PPH may have a sum of 2,1-insertion in the range of 0.4 to 1.3 mol-%, preferably in the range of 0.5 to 1.0 mol%, more preferably in the range

of 0.6 to 0.9 mol-%, even more preferably in the range from 0.7 to 0.9 mol-%, as determined by $^{13}C$ nuclear magnetic resonance (NMR) spectroscopy. The polypropylene homopolymer PPH is preferably a high isotactic polypropylene.

As mentioned above, the at least one polypropylene homopolymer (PPH) has a xylene cold soluble (XCS) content determined according to ISO 16152 based on the overall weight of polypropylene homopolymer of less than 1.5 wt.-%. In an embodiment, the at least one polypropylene homopolymer (PPH) has a xylene cold soluble (XCS) of less than 1.2 wt.-%, preferably of less than 1.0 wt.-%, in particular in the range of 0.1 to less than 1.5 wt.-%; preferably in the range of 0.2 to 1.2 wt.-%, more preferably in the range of 0.2 to 1.0 wt.-%, more preferably in the range of 0.25 to 0.8 wt.-%, for example in the range of 0.25 to 0.6 wt.-%, particular in the range of 0.28 to 0.5 wt.-%, more particular in the range of 0.28 to less than 0.4 wt.-%, such as in the range from 0.3 to 0.38 wt.-%.

The polypropylene homopolymer (PPH) is further preferably characterized by a melting point (Tm), as determined by differential scanning calorimetry (DSC, ISO 11357 / part 3 / method C2), in a range of 145 to 160°C, preferably in a range of 148 to 160 °C, more preferably in a range of 148 to 158 °C, like in a range of 150 to 157 °C.

The polypropylene homopolymer (PPH) is further preferably characterized by a crystallization temperature (Tc), as determined by differential scanning calorimetry (DSC, ISO 11357 / part 3 / method C2), in a range of 95 to 125 °C, preferably in a range of 100 to 120 °C, more preferably in a range of 105 to 118 °C, even more preferably in a range of 108 to 116 °C.

In a preferred embodiment, the polypropylene homopolymer (PPH) has one or all of the following properties:

- an $MFR_2$ (ISO1133, 2.16 kg load at 230 °C) in the range between 2.7 and 3.5 g/10 min,
- molecular weight distribution Mw/Mn or polydispersity (measured by GPC according to ISO 16014-4:2003 and ASTM D 6474-99) in the range from 3.0 to 3.2, preferably to less than 3.2,
- a weight average molecular weight Mw in a range of 250 to 350 kg/mol, preferably in a range of 250 to 310 kg/mol,
- a sum of 2,1-insertion or 2,1-erythro-regio defects in the range from 0.7 to 0.9 mol-%, as determined by $^{13}C$ nuclear magnetic resonance (NMR) spectroscopy,.
- a xylene cold soluble (XCS) content determined according to ISO 16152 based on the overall weight of polypropylene homopolymer in the range from 0.3 to 0.38 wt.-%,
- a melting point (Tm), as determined by differential scanning calorimetry (DSC, ISO 11357 / part 3 / method C2) in a range of 150 to 157 °C,
- a crystallization temperature (Tc), as determined by differential scanning calorimetry (DSC, ISO 11357 / part 3 / method C2) in a range of 108 to 116 °C.

The synthesis of the at least one polypropylene homopolymer (PPH) is now described (see also WO 2023/187145 A1).

The polypropylene homopolymer PPH is produced with a metallocene catalyst. Preferably, the polypropylene homopolymer PPH is produced in a sequential polymerization process using a specific metallocene catalyst. Accordingly, the polypropylene homopolymer PPH is produced with a metallocene catalyst as disclosed in WO 2019/179959 A1.

The metallocene catalyst complexes used for the manufacture of the polypropylene homopolymer PP is in particular defined by formula (I):

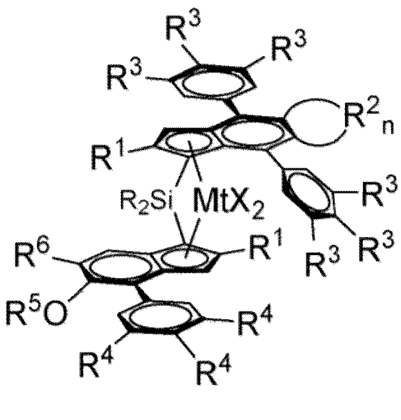

Formula (I)

In a complex of formula (I) it is preferred if Mt is Zr or Hf, preferably Zr; each X is a sigma ligand. Most preferably, each X is independently a hydrogen atom, a halogen atom, C1-C6 alkoxy group or an R' group, where R' is a C1-C6 alkyl, phenyl or benzyl group. Most preferably, X is chlorine, benzyl or a methyl group. Preferably, both X 20 groups are the same. The most preferred options are two chlorides, two methyl or two benzyl groups, especially two chlorides. For further

preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1 -yl ][2-methyl-4-(3',5'-dimethyl-phenyl)-5-methoxy-6-tert-butylinden-1-yl] zirconium dichloride (MC-1 );

rac-anti -dimethylsilanediyl[2-methyl-4,8-bis-(3 ',5' -dimethylphenyl)-1 ,5,6, 7-tetrahydro-s-indacen-1-yl] [2-methyl-4-(3' 5 '-dimethylphenyl)-5-methoxy-6-tertbutylinden-1 -yl] zirconium dichloride (MC-2);

rac-anti-dimethylsilanediyl[2-methyl-4,8-bis-(3',5'-dimethylphenyl)-1,5,6,7-tetrahydro-s-indacen -1-yl] [2-methyl-4-(3',5' -ditert-butyl-phenyl)-5-methoxy-6-tertbutylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

To form an active catalytic species it is normally necessary to employ a cocatalyst as is well known in the art. Here, a cocatalyst system comprising a boron containing cocatalyst and an aluminoxane cocatalyst is used in combination with the above defined metallocene catalyst complex. Typical aluminoxane cocatalysts are state of the art. The preferred aluminoxane is methylaluminoxane (MAO). Since the aluminoxanes used as cocatalysts are not, owing to their mode of preparation, pure compounds, the molarity of aluminoxane solutions hereinafter is based on their aluminum content.

As mentioned above the aluminoxane cocatalyst is used in combination with a boron containing cocatalyst.

Boron based cocatalysts of interest include those of formula (Z)

$BY_3$ (Z)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, toluyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris( 4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl) borane. Particular preference is given to tris(pentafluorophenyl)borane.

Preferred ionic compounds which can be used include:

triethylammoniumtetra(phenyl)borate,
tributylammoniumtetra(phenyl)borate,
trimethylammoniumtetra(tolyl)borate,
tributylammoniumtetra(tolyl)borate,
tributylammoniumtetra(pentafluorophenyl)borate,
tripropylammoniumtetra(dimethylphenyl)borate,
tributylammoniumtetra(trifluoromethylphenyl)borate,
tributylammoniumtetra( 4-fluorophenyl)borate,
N,N-dimethylcyclohexylammoniumtetrakis(pentafluorophenyl)borate,
N,N-dimethylbenzylammoniumtetrakis(pentafluorophenyl)borate,
N,N-dimethylaniliniumtetra(phenyl)borate,
N,N-diethylaniliniumtetra(phenyl)borate,
N,N-dimethylaniliniumtetrakis(pentafluorophenyl)borate,
N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate,
triethylphosphoniumtetrakis(phenyl)borate,
diphenylphosphoniumtetrakis(phenyl)borate,
tri(methylphenyl)phosphoniumtetrakis(phenyl)borate,
tri( dimethylphenyl)phosphoniumtetrakis(phenyl )borate,
triphenylcarbeniumtetrakis(pentafluorophenyl)borate, or
ferroceniumtetrakis(pentafluorophenyl)borate.

Preference is given to triphenylcarbeniumtetrakis(pentafluorophenyl) borate, N,Ndimethylcyclohexylammoniumtetrakis(pentafluorophenyl)borate or N,N- Dimethylbenzylammoniumtetrakis(pentafluorophenyl)borate.

Certain boron cocatalysts are especially preferred. Preferred borates comprise the trityl ion. Thus, the use of N,N-dimethylammonium-tetrakispentafluorophenylborate and $Ph_3CB(PhF_5)_4$ and analogues therefore are especially favoured.

It is especially preferred the combination of a borate cocatalyst, like Trityl tetrakis(pentafluorophenyl) borate, and methylaluminoxane (MAO).

Suitable amounts of cocatalyst will be well known to the skilled man. The molar ratio of boron to the metal ion of the metallocene may be in the range of 0.5:1 to 10:1 mol/mol, preferably in the range of 1:1 to 10:1, especially in the range 20 of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methyl aluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed. In order to provide the catalyst in solid form but without using an external carrier, it is preferred if a liquid/liquid emulsion system is used. Full disclosure of the necessary process can be found in WO 03/051934 A1.

The most preferred catalyst system is defined in the example section below (single site catalyst system 1 (SSCS1)).

The polymerization conditions in the sequential polymerization of polypropylene are well known to the skilled person. The prepolymerization may be carried out in any type of continuously operating polymerization reactor. The prepolymerization may be carried out in a slurry polymerization or a gas phase polymerization reactor, preferably in a loop prepolymerization reactor.

In a preferred embodiment, the prepolymerization is conducted as bulk slurry polymerization in liquid propylene, i.e. the liquid phase mainly comprises propylene, with minor amount of other reactants and optionally inert components dissolved therein. The prepolymerization is carried out in a continuously operating reactor at an average residence time of 5 minutes up to 90 min. Preferably the average residence time is within the range of 10 to 60 minutes and more preferably within the range of 15 to 45 minutes. The prepolymerization reaction is typically conducted at a temperature of 0 to 50 °C, preferably from 10 to 45 °C, and more preferably from 15 to 35 °C.

The pressure in the prepolymerization reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar. In case a prepolymerization step is performed, all of the catalyst mixture is introduced to the prepolymerization step. The precise control of the prepolymerization conditions and reaction parameters is within the skill of the art.

Following prepolymerization, a first propylene polymer fraction (R1) is preferably produced in a slurry phase polymerization step, i.e. in the liquid phase. The temperature in the slurry polymerization is typically from 50 to 110 °C, preferably from 55 to 100°C and in particular from 60 to 90 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-30 A-5391654.

The residence time can vary in the reactor zones identified above. In one embodiment, the residence time in the slurry reactor, for example a loop reactor, is in the range of from 0.5 to 5 hours, for example 0.5 to 2 hours, while the

residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The reaction product of the slurry phase polymerization, i.e. the first propylene polymer fraction (R1), which preferably is carried out in a loop reactor, is then transferred to the subsequent gas phase reactor in which the second propylene polymer fraction (R2) is produced.

The polymerization in gas phase may be conducted in fluidized bed reactors, in fast fluidized bed reactors or in settled bed reactors or in any combination of these. When a combination of reactors is used then the polymer is transferred from one polymerization reactor to another. However, it is preferred that the second propylene polymer fraction (R2) is produced in one gas phase reactor.

Typically, the gas phase reactor is operated at a temperature within the range of from 50 to 100 °C, preferably from 65 to 95 °C. The pressure is suitably from 10 to 40 bar, preferably from 15 to 30 bar.

Accordingly, the first propylene polymer fraction (R1) is produced in the first step, i.e. in a first reactor, e.g. the loop reactor, whereas the second propylene polymer fraction (R2) is produced in the subsequent step, i.e. in the second reactor, e.g. the gas phase reactor. In case the polymerization process of the first propylene polymer fraction (R1) and the second propylene polymer fraction (R2) contains also a prepolymerization step, then the first propylene polymer fraction (R1) is the polymer produced in the prepolymerization together with the polymer produced in the subsequent first step, in the first reactor, e.g. the loop reactor, whereas the second propylene polymer fraction (R2) is the product of the second reactor, e.g. the gas phase reactor. The amount of polymer produced in the prepolymerization step is comparatively small compared to the quantities produced in the first reactor and therefore has no great influence on the properties of the propylene polymer from the first reactor.

Additives

As mentioned, the polypropylene composition comprises up to or not more than 5.0 wt.-% , preferably up to or not more than 4.0 wt.-%, more preferably up to or not more than 3.0 wt.-%, even more preferably up to or not more than 2.0 wt.-%, still more preferably up to or not more than 1.0 wt.-% of one or more additives.

The polypropylene composition may comprise the at least one additive in an amount in a range from 0.01 wt.-% to 5.0 wt.-%, preferably from 0.1 wt.-% to 4.0 wt.-%, more preferably from 0.2 wt.-% to 2.0 wt.-%, even more preferably from 0.3 wt.-% to 1.0 wt.-%.

Preferably, at least one of the at least one additive is an antioxidant. The amount of said antioxidant in the polypropylene composition may be less than 0.5 wt.-% antioxidants, more in particular less than 0.3 wt.-% antioxidants, even more in particular less than 0.2 wt.-% antioxidants.

Examples of antioxidants which are commonly used in the art, are sterically hindered phenols (such as CAS No. 6683-19-8, also sold as Irganox 1010 FF™ by BASF or Irganox B 215 FF by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogenbased antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Other additives may include acid scavengers such as calcium stearate, magnesium oxide or magnesium/aluminium-hydrotalcite, slip agents such as erucamide and oleamide, antiblocking agents such as silica and nucleating agents.

Polypropylene composition

The polypropylene composition according to the invention has been tailored to be suited for the manufacture of cast films.

In one embodiment, the polypropylene composition comprises

a) at least 98 wt.-% (based on the overall weight of the polypropylene composition) of the at least one polypropylene homopolymer PPH, and
b) up to 2 wt.-% of one or more additives, wherein the sum of all ingredients always adds up to 100 wt.-%.

In a further embodiment, the polypropylene composition comprises

a) at least 99 wt.-% (based on the overall weight of the polypropylene composition) of the at least one polypropylene homopolymer PPH, and
b) up to 1 wt.-% of one or more additives, wherein the sum of all ingredients always adds up to 100 wt.-%.

In still a further embodiment, the polypropylene composition comprises

a) at least 99.5 wt.-% (based on the overall weight of the polypropylene composition) of the at least one polypropylene homopolymer PPH, and
b) up to 0.5 wt.-% of one or more additives, wherein the sum of all ingredients always adds up to 100 wt.-%.

In yet a further embodiment, the polypropylene composition comprises

a) at least 99.8 wt.-% (based on the overall weight of the polypropylene composition) of the at least one polypropylene homopolymer PPH, and
b) up to 0.2 wt.-% of one or more additives, wherein the sum of all ingredients always adds up to 100 wt.-%.

In a most preferred embodiment, the polypropylene composition comprises

a) at least 99.8 wt.-% (based on the overall weight of the polypropylene composition) of the at least one polypropylene homopolymer PPH, and
b) up to 0.2 wt.-% of at least one antioxidant and/or at least one acid scavenger, wherein the sum of all ingredients always adds up to 100 wt.-%.

The polypropylene composition has one and/or all of the following properties:

- $MFR_2$ (ISO1133, 2.16 kg load at 230 °C) between 2.5 and 5.0 g/10 min, preferably between 2.5 and 4.5 g/10 min, more preferably between 2.7 and 4.0 g/10 min, even more preferably between 3.0 and 3.5 g/10 min,
- a xylene cold soluble (XCS) content of less than 1.5 wt.-%, in particular of less than 1.2 wt.-%, preferably of less than 1.0 wt.-%, in particular in the range of 0.1 to less than 1.5 wt.-%; preferably in the range of 0.2 to 1.2 wt.-%, more preferably in the range of 0.2 to 1.0 wt.-%, more preferably in the range of 0.25 to 0.8 wt.-%, for example in the range of 0.25 to 0.6 wt.-%, particular in the range of 0.28 to 0.5 wt.-%, more particular in the range of 0.28 to 0.4 wt.-%,
- a melting temperature ($T_m$) (measured by DSC according to ISO 11357 / part 3 / method C2) in the range of 145 to 160 °C. In an embodiment, the polypropylene composition has a melting temperature ($T_m$) in the range of 148 to 160 °C, preferably in the range of 150 to 160 °C, more preferably in the range of 152 to 158 °C,
- a crystallization temperature ($T_C$) measured by DSC according to ISO 11357 / part 3 / method C2 in the range of 95 to 125 °C, preferably in the range of 100 to 120 °C, more preferably in the range of 105 to 118 °C, even more preferably in the range of 110 to 116°C, still more preferably in the range of 112 to 115 °C,
- a difference between melting and crystallization temperature, Tm - Tc, in a range of 30 to 50 °C, preferably in a range of 35 to 45 °C, even more preferably in a range of 38 to 42 °C.

In a specific embodiment of the polypropylene composition comprising at least 99.8 wt.-% (based on the overall weight of the polypropylene composition) of the at least one polypropylene homopolymer PPH, and up to 0.2 wt.-% of at least on antioxidant and/or at least one acid scavenger, wherein the sum of all ingredients always adds up to 100 wt.-%, the polypropylene composition may have one and/or all of the following properties:

- $MFR_2$ (ISO1133, 2.16 kg load at 230 °C) between 3.0 and 3.5, g/10 min, preferably between 3.0 and 3.4 g/10 min,
- a xylene cold soluble (XCS) content in the range of 0.28 to less than 0.4 wt.-%, more particular in the range of 0.28 to 0.35 wt.-%,
- a melting temperature ($T_m$) (measured by DSC according to ISO 11357 / part 3 / method C2) in the range of 152 to 158 °C,
- a crystallization temperature ($T_C$) measured by DSC according to ISO 11357 / part 3 / method C2 in the range of 112 to 115 °C,
- a difference between melting and crystallization temperature, Tm - Tc, in a range of 38 to 42 °C.

<u>Cast film</u>

As mentioned, the polypropylene composition can be used for obtaining a cast film that will be used in pharmaceutical packaging systems, in particular tablet blisters.
Thus, the cast film preferably consists of the polypropylene composition.
The film according to the present invention may be produced via cast film process, where the molten polymer is passed through a flat die and the film is extruded, followed by a cooling step.
The cast film obtained may have a film thickness in a range from 100 to 1000 μm, preferably from 150 to 800 μm,

more preferably from 200 to 600 μm, even more preferably from 250 to 450 μm.

Said film may be a multilayer film, like a two-layer film or a three-layer film, in which case the layer comprising the polymer composition as described herein is the main layer. According to a preferred embodiment, said film is a monolayer film.

In still a further embodiment, the cast film (in particular a 300 μm thick cast film) made from said polypropylene composition has a thermoforming window in a range of >11 to 22 °C, preferably in a range of 13 to 20 °C, more preferably in a range of 15 to 18 °C.

Further, the cast film (in particular a 300 μm thick cast film) made from said polypropylene composition may have a haze (measured according to ASTM D 1003-00) in a range of 5 to 30%, preferably in the range of 10 to 25%, more preferably in a range of 12 to 22%, even more preferably in a range of 12 to 20 %, still more preferably in a range of 13 to 18%.

In another embodiment, the cast film (in particular a 300 μm thick cast film) made from said polypropylene composition has a tensile modulus in machine direction (ISO 527-3) of at least 800 MPa, preferably of at least 1000 MPa, more preferably of at least 1100 MPa, in particular in a range between 800 and 1500 MPa, more in particular in a range between 1000 and 1300 MPa, even more preferably in a range between 1100 and 1250 MPa.

In yet a further embodiment, the cast film (in particular a 300 μm thick cast film) made from said polypropylene composition has a crystallinity (as determined on 300 μm cast film by wide angle X-ray Scattering measurement (WAXS) as provided in the description) in a range of 45 to 75%, preferably in a range of 50 to 70%, more preferably in a range of 56 to 68%, even more preferably in a range of 58 to 67%, still more preferably in a range of 57 to 60%.

Still further, the cast film (in particular a 300 μm thick cast film) made from said polypropylene composition has a water vapor transmission rate (WVTR, at 38°C 90%RH as determined according to ISO 15106-3:2003 on a 300μm cast film) of less than 0.68 g/$m^2$ day, preferably of less than 0.65 g/$m^2$ day, more preferably of less than 0.63 g/$m^2$ day, in particular in a range of 0.30 to < 0.68 g/$m^2$ day, more particular in a range of 0.35 to < 0.65 g/$m^2$ day, even more particular in a range of 0.40 to < 0.65 g/$m^2$, still more particular in a range of 0.45 to < 0.65 g/$m^2$, such as in a range of 0.50 to < 0.65 g/$m^2$, particular from 0.60 to < 0.65 g/$m^2$ day.

In an embodiment, wherein the cast film is obtained from the polypropylene composition comprising at least 99.8 wt.-% (based on the overall weight of the polypropylene composition) of the at least one polypropylene homopolymer PPH, and up to 0.2 wt.-% of at least on antioxidant and/or at least one acid scavenger, wherein the sum of all ingredients always adds up to 100 wt.-%, the cast film has one or all of the following properties:

- a thermoforming window in a range of 15 to 18 °C,
- a haze (measured according to ASTM D 1003-00) in a range of 13 to 18%,
- a tensile modulus in machine direction (ISO 527-3) in a range between 1100 and 1250 MPa,
- a crystallinity (as provided in the description) in a range of 57 to 60%,
- a water vapor transmission rate (WVTR, at 38°C 90%RH as determined according to ISO 15106-3:2003 on a 300μm cast film) in a range from 0.60 to < 0.65 g/$m^2$ day.

Use

The present invention further pertains to a use of a cast film as described herein, in a blister packaging like a pharmaceutical packaging, a food packaging or a non-food packaging, like a detergent or personal care packaging. Such blister packaging comprises a thermoformed element formed from the film according to the present invention, being the recipient for the packaged goods like tablets or capsules, and an aluminum-based sheet for the push-through part. The respective blister package is closed by sealing the flat parts of said thermoformed element formed from the film according to the present invention, to the aluminum-based sheet. The pharmaceutical packaging system, preferably tablet blister, is produced by thermoforming from a cast film as described above. The thermoforming temperature applied is in the range from 120 to 160 °C, preferably from 125 to 150 °C.

In an embodiment, the pharmaceutical packaging system has a water vapor transmission rate (WVTR, as calculated from absorption values according to USP671 at 40 °C and 75 % relative humidity) of less than 1.0 g/$m^2$ day, preferably of less than 0.9 g/$m^2$ day, in particular in a range from 0.05 to less than 1.0 g/$m^2$ day, more particular in a range from 0.1 to less than 0.9 g/$m^2$ day, even more particular in a range from 0.15 to less than 0.8 g/$m^2$ day.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

## Test Methods

The following definitions of terms and determination methods apply for the above general description of the invention as well as to the below examples unless otherwise defined.

## Crystallinity by WAXS

The degree of crystallinity of the PP film samples was studied by carrying out WAXS measurements in reflection mode with a Bruker Discover D8 diffractometer equipped with a two-dimensional GADDS detector and a Ni-filtered CuKα X-rays. Three measurements were performed on each sample and the corresponding results were averaged. The amorphous halo obtained from an atactic-PP sample [1] was properly scaled and subtracted and a crystallinity index ($X_c$) was quantified according to:

$$X_c = \frac{A_c}{A_{tot}}$$

where $A_{tot}$ is the area under the total pattern and $A_c$ is the area after subtraction of the amorphous halo (1 - D. Tranchida, L. Resconi L., Influence of 2, 1-erythro regiodefects on the crystallization behavior of isotactic polypropylene, Polymer Crystallization 1 (2018) e10022).

## Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**Xylene cold soluble fraction at room temperature (XCS, wt.-%):** The amount of the polymer soluble in xylene was determined at 25 °C according to ISO 16152; 5$^{th}$ edition; 2005-07-01.

**DSC analysis, melting temperature ($T_m$)** and **crystallization temperature ($T_c$):** measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization temperature ($T_c$) was determined from the cooling step, while melting temperature ($T_m$) was determined from the second heating step.

**Haze** was measured in accordance to ASTM D 1003-00 on the film as described below..

## The tensile properties acc ISO 527-3 (uniaxial tensile test)

The tensile properties (tensile modulus, tensile strength, tensile stain at strength, tensile stress at break, tensile strain at break) were determined acc. ISO 527-3 on 300μm thick cast films in machine direction. The testing temperature was 23±2°C.

**Water vapor transmission rate (WVTR)** was determined at 38°C 90%RHaccording to ISO 15106-3:2003 on a 300μm cast film.

## Molecular weight distribution

Molar mass averages (Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum_{i=1}^{N}(A_i/M_i)}$$

$$M_w = \frac{\sum_{i=1}^{N}(A_i\, x\, M_i)}{\sum_{i=1}^{N} A_i}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours at 160 °C under continuous gentle shaking in the autosampler of the GPC instrument.

**Quantification of microstructure by NMR spectroscopy**

Quantitative nuclear-magnetic resonance (NMR) spectroscopy was used to quantify the 2,1 erythro regio defect content of the polymers.

Quantitative $^{13}C\{^1H\}$ NMR spectra recorded in the solution-state using a Bruker Avance Neo 400MHz NMR spectrometer operating at 400.15 and 100.63 MHz for $^1H$ and $^{13}C$ respectively. All spectra were recorded using a $^{13}C$ optimised 10 mm selective excitation probehead at 125°C using nitrogen gas for all pneumatics. Approximately 200 mg of material was dissolved in *1,1,2,2*-tetrachloroethane-*$d_2$* (TCE-*$d_2$*) using approximately 3 mg of 2,6-di-tert-buthyl-4-methylphenol (CAS 128-37-0) as stabiliser. Standard 90 degree single-pulse excitation was employed utilising the NOE, bi-level WALTZ16 decoupling scheme, relaxation delay of 3 s and 10Hz sample rotation (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. This setup was chosen primarily for the high resolution needed for tacticity distribution and regio defect quantification (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

$^{13}C\{^1H\}$ NMR spectra were processed, integrated and relevant quantitative properties determined from the integrals using proprietary computer programs. All chemical shifts were internally referenced to the methyl signal of the isotactic pentad mmmm at 21.85 ppm.

The presence of 2,1 erythro regio defects (2,1e) was indicated by the presence of the two methyl sites at 17.6 and 17.2 ppm and confirmed by other characteristic sites (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.6 ($I_{e6}$) and 17.2 ($I_{e8}$) ppm:

$$P_{21e} = ( I_{e6} + I_{e8} ) / 2$$

The amount of 1,2 primary inserted propene was quantified based on the methyl region ($I_{CH3}$ 22.5 ppm - 19.8 ppm) with correction undertaken for sites included in this region not related to primary insertion and for primary insertion sites excluded from this region ($P_{12e} = P_{21e}$):

$$P_{12} = I_{CH3} + P_{12e}$$

The total amount of propene was quantified as the sum of primary inserted propene and propene from 2,1 erythro regio defects:

$$P_{total} = P_{12} + P_{21e}$$

The mole percent of 2,1 erythro regio defects was quantified with respect to all propene:

$$[2,1e] \text{ mol-\%} = 100 * ( P_{21e} / P_{total} )$$

**Preparation of propylene homopolymer PPH**

<u>Catalyst complex</u>

The following metallocene complex has been used as described in WO 2019/179959:

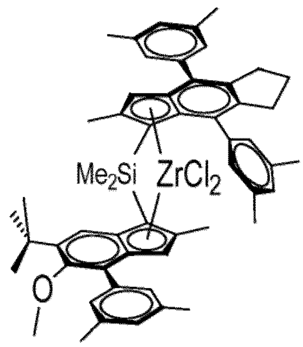

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding 10 drum followed by careful pressuring and de-pressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60°C under nitrogen flow for 2 hours and then for 5 hours under vacuum (-0.5 barg) with stirring. MAO treated support was collected as a free-flowing white powder found to contain 12.2% Al by weight.

Single site catalyst system 1 (SSC) preparation

30 wt.% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under N2 flow at 60°C for 2 h and additionally for 5 h under vacuum (-0.5 barg) under stirring. Dried catalyst was sampled in the form of pink free flowing powder containing 13.9% Al and 0.11% Zr.

Polymerization conditions for obtaining the polypropylene homopolymer PPH

Table 1 shows the polymerization settings for obtaining the polypropylene homopolymer PPH according to the invention and properties of manufactured of PPH samples manufactured according to said polymerization conditions.

Table 1

| **Catalyst** | | PPH |
|---|---|---|
| **Prepoly reactor** | | |
| Cat. Feed rate | g/h | 2.0 |
| Temperature | °C | 20 |
| Pressure | kPa | 5300 |
| Residence time | min | 24 |
| **Loop reactor (R1)** | | |
| Temperature | °C | 70 |
| Pressure | kPa | 5300 |
| Split | wt.-% | 65 |
| Feed H2/C3 | mol/kmol | 0.13 |

(continued)

| **Loop reactor (R1)** | | |
|---|---|---|
| MFR2 | g/10min | 5.6 |
| **Gas Phase Reactor (R2)** | | |
| Temperature | °C | 85 |
| Pressure | kPa | 2500 |
| Split | wt.-% | 35 |
| H2/C3 | mol/kmol | 1.2 |
| MFR2 (GPR1) | g/10min | 2.8 |
| XCS | wt.-% | 0.34 |
| Mn | g/mol | 94000 |
| Mw | g/mol | 294000 |
| Mw/Mn | - | 3.12 |
| [2,1-insertion] | Mol% | 0.8 |

Polyolefin composition for obtaining the cast film

Table 2 shows the basic polymer properties of an inventive example and a comparative example.

Inventive example IE1: polypropylene homopolymer PPH (pure homopolymer polymerized on SSC catalyst) was mixed with antioxidant (0.125 wt.-% Irganox B 215 FF) and calcium stearate as an acid scavenger (0.04 wt.-% Ceasit FI).

Comparative Example CE1: a polypropylene homopolymer (MFR2 2.8 g/10 min, Tm 163°C, polymerized on ZN catalyst (non-phthalate Sirius ZNPP, as described in WO/2016/066446 A1) was mixed with antioxidants (0.125 wt.-% Irganox B 215 FF and 0.04 wt.-% Ceasit FI).

Table 2:

| Grade | MFR / g/10min | XCS / wt.-% | Tm(DSC) / °C | Tc(DSC) / °C | Tm-Tc / °C |
|---|---|---|---|---|---|
| CE1 | 2.8 | 3.0 | 163 | 116 | 47 |
| IE1 | 3.3 | 0.3 | 154 | 114 | 40 |

Cast film

In order to compare the performance for the target application, cast sheets with a thickness of 300 μm were produced at a customer with the steel-belt technology. This technology consists of cooling one side of the film with a chillroll, as in cast technology, and the other side of the film with a steel-belt. The temperature of chillroll and steel-belt was 15°C.

The tensile properties of the films were then analysed according to ISO 527-3, the optical properties (haze) according to ASTM D1003, the crystallinity via Wide-Angle X-ray Scattering and the WVTR at 38°C 90% relative humidity (RH) according to ISO 15106-3.

The thermoforming trial was performed on an Uhlmann B1440 thermoforming machine with the 146/0099 1R/1T cavity design (diameter 16.7 mm, depth 11.97 mm, tilt angle of cavity wall 5°). The following parameters were kept constant during the thermoforming part:

- Line speed 9 m/min, 45 cycles/min, 360 blisters/min.
- Forming time 600 ms.
- Forming mold temperature 18 °C, cooled with air.
- Plug assist temperature 145 °C.
- Plug assist depth 8 mm.

The lowest forming window is defined as the temperature below which the formed cavities show inhomogeneous

distribution of the thickness in the wall and in the bottom of the cavity. The highest forming window is defined as the temperature above which the film is molten through or heavily deformed due to the vicinity to the melting point of the material.

As shown in Table 3, the mechanical and optical properties of the flat films are very similar, despite the crystallinity of IE1 is 4% higher than for CE1. The higher crystallinity of IE1, combined with a 10 times lower XCS (see Table 2), determines a 9% lower (beneficial) WVTR for IE1 compared to CE1.

Moreover, the thermoforming window for IE1 starts at a 10 °C lower temperature, due to the lower melting point of IE), and is 5°C broader than for CE1 (see Table 4). The lower forming temperature allows to use less energy for heating up the film and to achieve a better homogeneity of the temperature over the area of the heating plates that are pre-heating the film just before thermoforming occurs. The latter aspect results in a more homogeneous distribution of the temperature over the whole film and, thus, each cavity will experience the same thermal history.

In conclusion, when compared to CE1, IE1 shows better water barrier properties, a thermoforming window which is broader and starts at lower temperature, despite the mechanical and optical properties are basically the same among the two films.

Table 3: Properties and thermoforming behavior of comparative example CE1 and inventive example IE1

| **Property** | **Unit** | **CE1** | **IE1** |
|---|---|---|---|
| Tensile modulus | MPa | 1121 | 1120 |
| Haze | % | 12 | 14 |
| Crystallinity | % | 55 | 59 |
| WVTR 38°C 90%RH | $g/m^2$ day | 0.68 | 0.62 |
| Lowest forming temperature | °C | 136 | 126 |
| Highest forming temperature | °C | 146 | 141 |
| Forming window | °C | 11 | 16 |

## Claims

**1.** Cast film made of a polypropylene composition, wherein the polypropylene composition comprises

a) at least 95 wt.-% (based on the overall weight of the polypropylene composition) of at least one polypropylene homopolymer (PPH) having

a molecular weight distribution Mw/Mn measured by GPC (according to ISO 16014-4:2003 and ASTM D 6474-99) in the range of 2.8 to 3.5,
a $MFR_2$ (ISO1133, 2.16 kg load at 230 °C) between 2.5 and 5.0 g/10 min, and
a sum of 2,1-insertion or 2,1-erythro-regio defect in the range of 0.3 to 1.5 mol% as determined by $^{13}C$ nuclear magnetic resonance (NMR) spectroscopy,

- a melting temperature ($T_m$) (measured according to ISO 11357/part 3/method C2) in the range of 145°C to 160°C,
- a xylene cold soluble (XCS) content determined according to ISO 16152 based on the overall weight of polypropylene homopolymer of less than 1.5 wt.-%, and

b) up to 5 wt.-% of one or more additives, wherein the sum of all ingredients always adds up to 100 wt.-%,

**2.** Cast film according to claim 1, **characterized in that** the polypropylene composition comprises

a) at least 96 wt.-% (based on the overall weight of the polypropylene composition), preferably at least 97 wt.-%, more preferably at least 98 wt.-%, even more preferably at least 99 wt.-% of at least one polypropylene homopolymer, and
b) up to 4 wt.-%, preferably up to 3 wt.-%, more preferably up to 2 wt.-%, even more preferably up to1 wt.-% of one or more at least one additives, wherein the sum of all ingredients always adds up to 100 wt.-%.

3. Cast film according to one of the preceding claims, **characterized in that** the at last one polypropylene homopolymer (PPH) has a sum of 2,1-insertion in the range of 0.4 to 1.3 mol%, preferably in the range of 0.5 to 1.0 mol%, more preferably in the range of 0.6 to 0.9 mol-%, determined by $^{13}C$ nuclear magnetic resonance (NMR) spectroscopy.

4. Cast film according to one of the preceding claims, **characterized in that** the at least one polypropylene homopolymer (PPH) has an $MFR_2$ (ISO1133, 2.16 kg load at 230 °C) in the range between 2.5 and 4.5 g/10 min, preferably in the range between 2.7 and 3.5 g/10 min.

5. Cast film according to one of the preceding claims, **characterized in that** the at least one polypropylene homopolymer (PPH) has a xylene cold soluble (XCS) content determined according to ISO 16152 based on the overall weight of polypropylene homopolymer of less of less than 1.2 wt.-%, preferably of less than 1.0 wt.-%, in particular in the range of 0.1 to less than 1.5 wt.-%; preferably in the range of 0.2 to 1.2 wt.-%, more preferably in the range of 0.2 to 1.0 wt.-%, more preferably in the range of 0.25 to 0.8 wt.-%, for example in the range of 0.25 to 0.6 wt.-%, particular in the range of 0.28 to 0.5 wt.-%, more particular in the range of 0.28 to 0.4 wt.-%.

6. Cast film according to one of the preceding claims, **characterized in that** the at least one polypropylene homopolymer (PPH) has a melting temperature ($T_m$) (measured according to ISO 11357/part 3/method C2) in the range. from 145 to 160 °C, preferably in a range from 148 to 160 °C, more preferably in a range from 148 to 158 °C, like in a range from 150 to 157 °C.

7. Cast film according to one of the preceding claims, **characterized in that** the at least one polypropylene homopolymer (PPH) has a crystallization temperature ($T_C$) measured by DSC according to ISO 11357/part 3/method C2 in the range from 95 °C to 125 °C, preferably in the range from 100 °C to 120 °C, more preferably in the range from 105 °C to 118 °C, even more preferably in the range of 108 °C to 116 °C, still more preferably in the range of 112 °C to 115 °C.

8. Cast film according to one of the preceding claims, **characterized by** a film thickness in a range from 100 to 1000 μm, preferably from 150 to 800 μm, more preferably from 200 to 600 μm, even more preferably from 250 to 450 μm.

9. Cast film according to one of the preceding claims, **characterized by** a thermoforming window in a range from >11 to 22 °C, preferably in a range from 13 to 20 °C, more preferably in a range from 15 to 18 °C.

10. Cast film according to one of the preceding claims, **characterized by** a haze (measured according to ASTM D 1003-00) in a range from 5 to 30%, preferably in the range of 10 to 25%, more preferably in a range of 12 to 22%, even more preferably in a range of 12 to 20 %, still more preferably in a range of 13 to 18%.

11. Cast film according to one of the preceding claims, **characterized by** a tensile modulus in machine direction (ISO 527-3) of at least 800 MPa, preferably of at least 1000 MPa, more preferably of at least 1100 MPa, in particular in a range between 800 and 1500 MPa, more in particular in a range between 1000 and 1300 MPa, even more preferably in a range between 1100 and 1250 MPa.

12. Cast film according to one of the preceding claims, **characterized by** a crystallinity (as determined on 300 μm cast film by wide angle X-ray Scattering measurement (WAXS) as provided in the description) in a range of 45 to 75%, preferably in a range of 50 to 70%, more preferably in a range of >55 to 68%, even more preferably in a range of 58 to 67%, still more preferably in a range of 57 to 60%.

13. Cast film according to one of the preceding claims, **characterized by** a water vapor transmission rate (WVTR, at 38°C 90%RH as determined according to ISO 15106-3:2003 on a 300μm cast film) of less than 0.68 $g/m^2$ day, preferably of less than 0.65 $g/m^2$ day, more preferably of less than 0.63 $g/m^2$ day, in particular in a range of 0.55 to < 0.68 $g/m^2$ day, more particular in a range of 0.60 to < 0.65 $g/m^2$ day.

14. Cast film according to one of the preceding claims, **characterized in that** at least one of the at least one additive is an antioxidant and/or acid scavenger.

15. Use of a cast film according to one of the preceding claims in pharmaceutical packaging systems, in particular tablet blisters.

Europäisches Patentamt
European Patent Office
Office européen des brevets

# EUROPEAN SEARCH REPORT

Application Number
EP 25 19 8129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/013643 A1 (BOREALIS AG [AT]) 28 January 2021 (2021-01-28)<br>* page 26; example HPP; table 1 *<br>* examples IE1-IE3; table 2 *<br>* claims 1-5,8-14 *<br>* page 4, line 19 - line 23 *<br>----- | 1-15 | INV.<br>C08F110/06<br>C08L23/12<br>B65D75/00 |
| X | WO 2020/239602 A1 (BOREALIS AG [AT]) 3 December 2020 (2020-12-03)<br>* page 57, line 30 - page 58, line 5 *<br>* page 58, line 18 - page 59, line 5 *<br>* example IE5; tables 4-5 *<br>* page 52, complex C2 *<br>* page 38, line 35 - page 39, line 6 *<br>----- | 1-14 | |
| X | WO 2018/122134 A1 (BOREALIS AG [AT]) 5 July 2018 (2018-07-05)<br>* claims 1,22 *<br>* page 89, catalyst MC-IE2 *<br>* page 111 - page 112; example IE2; tables 10-11 *<br>* page 44, line 28 - page 45, line 13 *<br>----- | 1-14 | TECHNICAL FIELDS SEARCHED (IPC)<br>C08F<br>C08L<br>B65D |
| A | WO 2022/248517 A1 (TOTALENERGIES ONETECH BELGIUM [BE]; UNIV RENNES [FR] ET AL.) 1 December 2022 (2022-12-01)<br>* claims 1,16,18 *<br>* Example "TS-F202/MAO/Ref 1" in tables 5-6 *<br>* Example "Comp 1C" in table 11 *<br>* page 30, line 21 - line 32 *<br>-----<br>-/-- | 1-15 | |

The present search report has been drawn up for all claims

1

| Place of search | Date of completion of the search | Examiner |
|---|---|---|
| Munich | 12 January 2026 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 19 8129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/080151 A1 (BOREALIS AG [AT]; GLOGER DIETRICH [AT]; PAAVILAINEN JUHA [FI]) 7 July 2011 (2011-07-07)<br>* claims 1,8,12 *<br>* examples E1-E2; tables 1,4 *<br>* page 10, line 20 - line 21 *<br>* page 32, line 16 - line 18 *<br>* page 35, line 1 - line 2 *<br>----- | 1-15 | |
| A | WO 2011/080153 A1 (BOREALIS AG [AT]; GLOGER DIETRICH [AT] ET AL.)<br>7 July 2011 (2011-07-07)<br>* example E3; tables 1-3,5 *<br>* page 13, line 1 - line 2 *<br>* claims 1,8,12 *<br>----- | 1-15 | |
| A | WO 2011/135005 A2 (BOREALIS AG [AT]; RESCONI LUIGI [FI] ET AL.)<br>3 November 2011 (2011-11-03)<br>* claims 1,18,19 *<br>* example 2b; tables 5-6 *<br>* page 1, line 4 - line 9 *<br>* page 11, line 8 - line 10 *<br>* page 29, line 5 - line 8 *<br>----- | 1-15 | TECHNICAL FIELDS SEARCHED (IPC) |
| A | WO 2012/084961 A1 (BOREALIS AG [AT]; RESCONI LUIGI [IT] ET AL.)<br>28 June 2012 (2012-06-28)<br>* claims 2-4; examples E1-P3 *<br>* page 33, line 16 - line 19 *<br>----- | 1-15 | |
| X | EP 4 335 881 A1 (BOREALIS AG [AT])<br>13 March 2024 (2024-03-13)<br>* paragraphs [0089], [0116], [0120] - paragraph [0123] *<br>* example CE4; tables 1-2 *<br>* claims 1,13 *<br>----- | 1-15 | |

The present search report has been drawn up for all claims

1

| Place of search | Date of completion of the search | Examiner |
|---|---|---|
| Munich | 12 January 2026 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 25 19 8129

This annex lists the patent family members relating to the patent documents cited in the above-mentioned European search report. The members are as contained in the European Patent Office EDP file on
The European Patent Office is in no way liable for these particulars which are merely given for the purpose of information.

12-01-2026

| Patent document cited in search report | Publication date | Patent family member(s) | Publication date |
|---|---|---|---|
| WO 2021013643 A1 | 28-01-2021 | BR 112022000700 A2 | 03-03-2022 |
| | | CN 114127171 A | 01-03-2022 |
| | | EP 3999576 A1 | 25-05-2022 |
| | | US 2022259339 A1 | 18-08-2022 |
| | | WO 2021013643 A1 | 28-01-2021 |
| WO 2020239602 A1 | 03-12-2020 | CN 114127129 A | 01-03-2022 |
| | | CN 114127130 A | 01-03-2022 |
| | | CN 114174352 A | 11-03-2022 |
| | | EP 3976667 A1 | 06-04-2022 |
| | | EP 3976668 A1 | 06-04-2022 |
| | | EP 3976669 A1 | 06-04-2022 |
| | | JP 7555972 B2 | 25-09-2024 |
| | | JP 7671700 B2 | 02-05-2025 |
| | | JP 7680965 B2 | 21-05-2025 |
| | | JP 2022534114 A | 27-07-2022 |
| | | JP 2022534281 A | 28-07-2022 |
| | | JP 2022534957 A | 04-08-2022 |
| | | KR 20220016162 A | 08-02-2022 |
| | | KR 20220016163 A | 08-02-2022 |
| | | KR 20220016164 A | 08-02-2022 |
| | | SA 521430996 B1 | 24-06-2025 |
| | | SA 521430997 B1 | 20-01-2025 |
| | | SA 521430998 B1 | 09-02-2025 |
| | | US 2022220143 A1 | 14-07-2022 |
| | | US 2022220231 A1 | 14-07-2022 |
| | | US 2022227800 A1 | 21-07-2022 |
| | | US 2025313587 A1 | 09-10-2025 |
| | | WO 2020239598 A1 | 03-12-2020 |
| | | WO 2020239602 A1 | 03-12-2020 |
| | | WO 2020239603 A1 | 03-12-2020 |
| WO 2018122134 A1 | 05-07-2018 | CN 110352195 A | 18-10-2019 |
| | | EP 3562831 A1 | 06-11-2019 |
| | | JP 7130649 B2 | 05-09-2022 |
| | | JP 2020511423 A | 16-04-2020 |
| | | KR 20190095956 A | 16-08-2019 |
| | | US 2022363703 A1 | 17-11-2022 |
| | | WO 2018122134 A1 | 05-07-2018 |
| WO 2022248517 A1 | 01-12-2022 | CN 117396523 A | 12-01-2024 |
| | | EP 4347667 A1 | 10-04-2024 |
| | | JP 2024522262 A | 12-06-2024 |
| | | KR 20240011772 A | 26-01-2024 |
| | | US 2024209127 A1 | 27-06-2024 |
| | | WO 2022248517 A1 | 01-12-2022 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO.

EP 25 19 8129

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2026

| Patent document cited in search report | | Publication date | Patent family member(s) | | | Publication date |
|---|---|---|---|---|---|---|
| WO 2011080151 | A1 | 07-07-2011 | CN | 102712716 | A | 03-10-2012 |
| | | | EP | 2341088 | A1 | 06-07-2011 |
| | | | RU | 2012131696 | A | 10-02-2014 |
| | | | WO | 2011080151 | A1 | 07-07-2011 |
| WO 2011080153 | A1 | 07-07-2011 | BR | 112012015909 | A2 | 21-06-2016 |
| | | | CN | 102712717 | A | 03-10-2012 |
| | | | EP | 2341086 | A1 | 06-07-2011 |
| | | | EP | 2519550 | A1 | 07-11-2012 |
| | | | ES | 2458928 | T3 | 07-05-2014 |
| | | | KR | 20120108035 | A | 04-10-2012 |
| | | | KR | 20140120378 | A | 13-10-2014 |
| | | | US | 2012329951 | A1 | 27-12-2012 |
| | | | WO | 2011080153 | A1 | 07-07-2011 |
| WO 2011135005 | A2 | 03-11-2011 | CN | 103025767 | A | 03-04-2013 |
| | | | EP | 2563821 | A2 | 06-03-2013 |
| | | | JP | 6026995 | B2 | 16-11-2016 |
| | | | JP | 2013525558 | A | 20-06-2013 |
| | | | KR | 20130060208 | A | 07-06-2013 |
| | | | US | 2013131291 | A1 | 23-05-2013 |
| | | | WO | 2011135005 | A2 | 03-11-2011 |
| WO 2012084961 | A1 | 28-06-2012 | CN | 103380151 | A | 30-10-2013 |
| | | | EP | 2655431 | A1 | 30-10-2013 |
| | | | JP | 2014505136 | A | 27-02-2014 |
| | | | KR | 20140007360 | A | 17-01-2014 |
| | | | US | 2014018506 | A1 | 16-01-2014 |
| | | | WO | 2012084961 | A1 | 28-06-2012 |
| EP 4335881 | A1 | 13-03-2024 | CN | 119855841 | A | 18-04-2025 |
| | | | EP | 4335881 | A1 | 13-03-2024 |
| | | | WO | 2024052569 | A1 | 14-03-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 5249797 B
- WO 2023187145 A1
- WO 2019179959 A1
- WO 2019179959 A
- WO 9414856 A
- WO 9512622 A
- WO 2006097497 A
- WO 03051934 A1
- US 4582816 A
- US 3405109 A
- US 3324093 A
- EP 479186 A
- US 5391654 A
- WO 2016066446 A1

### Non-patent literature cited in the description

- *CHEMICAL ABSTRACTS*, 6683-19-8
- *CHEMICAL ABSTRACTS*, 31570-04-4
- *CHEMICAL ABSTRACTS*, 693- 36-7
- **D. TRANCHIDA** ; **L. RESCONI L.** Influence of 2, 1-erythro regiodefects on the crystallization behavior of isotactic polypropylene. *Polymer Crystallization*, 2018, vol. 1, e10022
- *CHEMICAL ABSTRACTS*, 128-37-0
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **RESCONI, L.** ; **CAVALLO, L.** ; **FAIT, A.** ; **PIEMONTESI, F.** *Chem. Rev.*, 2000, vol. 100, 1253